# EUROPÄISCHE PATENTSCHRIFT

(11) **EP 2 440 803 B1**
(45) Veröffentlichungstag und Bekanntmachung des Hinweises auf die Patenterteilung: **27.03.2013**
(21) Anmeldenummer: 10714630.0
(22) Anmeldetag: 20.04.2010
(51) Int. Cl.: B60S 1/16, F16C 17/26, F16C 35/02, H02K 5/167, F16C 25/04, B60S 1/34

(54) **LAGEREINRICHTUNG ZUR LAGERUNG EINER WELLE**
BEARING DEVICE FOR MOUNTING A SHAFT
SYSTÈME PALIER POUR SOUTENIR UN ARBRE

(30) Priorität: 10.06.2009 DE 102009026880
(43) Veröffentlichungstag der Anmeldung: 18.04.2012
(73) Patentinhaber: Robert Bosch GmbH, 70442 Stuttgart (DE)
(72) Erfinder: KASTINGER, Guenter, 76571 Gaggenau-Sulzbach (DE); HUESGES, Mario, 77830 Buehlertal (DE); OBERT, Mike, 76593 Gernsbach (DE); LAUK, Detlef, 77871 Renchen (DE); RIEDINGER, Klaus, 76571 Gaggenau (DE)
(86) Internationale Anmeldenummer: PCT/EP2010/055167
(87) Internationale Veröffentlichungsnummer: WO 2010/142485

(56) Entgegenhaltungen:
- DE-A1- 19 652 929
- DE-A1- 19 738 396

## Beschreibung

Die Erfindung bezieht sich auf eine Lagereinrichtung zur Lagerung einer Welle nach dem Oberbegriff des Anspruches 1.

### Stand der Technik

Aus der DE 196 52 929 A1 ist es bekannt, die Ankerwelle eines Elektromotors in einem Getriebegehäuse, welches an das Motorgehäuse angeflanscht ist, in Wälzlagern drehbar zu lagern. Die Wälzlager bestehen in an sich bekannter Weise aus einem Außenring, welches in einem Lagersitz im Getriebegehäuse kraftschlüssig aufgenommen ist, und einem drehbaren Innenring, der drehfest mit der Ankerwelle verbunden ist. Im Getriebegehäuse sind insgesamt zwei axial zueinander beabstandete Wälzlager zur Lagerung der Ankerwelle vorgesehen.

Das Getriebegehäuse besteht beispielsweise bei Frontwischermotoren, die in Kraftfahrzeugen eingesetzt werden, in der Regel aus Aluminium-Druckguss. Zur Aufnahme der im laufenden Betrieb entstehenden Kräfte und Momente sind die Lagerstellen im Getriebegehäuse verhältnismäßig dickwandig bzw. mit Stützrippen ausgeführt.

### Offenbarung der Erfindung

Der Erfindung liegt die Aufgabe zugrunde, eine Lagereinrichtung zur Lagerung einer Welle zu schaffen, die sich durch eine einfache Herstellbarkeit und eine hohe Präzision auszeichnet.

Diese Aufgabe wird erfindungsgemäß mit den Merkmalen des Anspruches 1 gelöst. Die Unteransprüche geben zweckmäßige Weiterbildungen an.

Die erfindungsgemäße Lagereinrichtung dient zur Lagerung einer Welle, insbesondere einer Abtriebs- bzw. Getriebewelle, über die die Ankerwellenbewegung eines Elektromotors weitergeleitet wird, oder auch einer Ankerwelle eines Elektromotors, und umfasst zwei Lagerstellen für die Welle in einem Gehäuse. Eine der Lagerstellen ist in einem Gehäusesitz im Gehäuse gebildet, die zweite Lagerstelle befindet sich in einem separat ausgebildeten Stützblech, das im Gehäuse aufgenommen ist. Die erste und die zweite Lagerstelle sind zueinander mit axialem Abstand angeordnet.

Diese Ausführung weist verschiedene Vorteile auf. Über das zusätzliche, in dem Gehäuse abgestützten Stützblech kann eine bessere Verteilung der Kräfte und Momente im Gehäuse erreicht werden, wodurch die lokale Kraftbelastung insbesondere im Bereich der im Stützblech gebildeten Lagerstelle reduziert ist und dementsprechend dünnwandigere Gehäusewandungen und/oder kostengünstigere Gehäusematerialien verwendet werden können. Zudem ist die Herstellung vereinfacht, da das Stützblech als separates Bauteil unabhängig vom Gehäuse herzustellen ist und lediglich in das Gehäuse eingesetzt werden muss. Das Stützblech besteht vorzugsweise aus einem dünnwandigen, im Tiefziehprozess hergestellten Blech. Auch das Gehäuse besteht vorzugsweise aus einem dünnwandigen Blech. Die bessere Kräfteverteilung erlaubt es zudem, auf Stützrippen im Gehäuse zu verzichten oder zumindest die Anzahl derartiger Stützrippen zu verringern bzw. schwächer ausgeprägte Stützrippen vorzusehen.

Über das Stützblech kann sowohl in Radialrichtung als auch in Achsrichtung eine bessere Kräfteverteilung der Stützkräfte erzielt werden. Ein weiterer Vorteil liegt darin, dass ein verhältnismäßig großer axialer Abstand zwischen den beiden Lagerstellen erreicht werden kann, was zu einer Reduzierung der Lagerkräfte, insbesondere der Querkräfte führt. Der axiale Lagerstellenabstand kann mithilfe des Stützbleches vergrößert werden, so dass trotz des großen Lagerstellenabstandes das Gehäuse als tiefgezogenes Blech ausgeführt sein kann, was bei Ausführungen aus dem Stand der Technik, in denen kein separates Stützblech in das Gehäuse eingesetzt ist, nicht oder nur mit großem Aufwand möglich ist.

Des Weiteren kann das Stützblech so ausgebildet sein, dass die darin gebildete Lagerstelle einen zumindest annähernd gleichen Radius aufweist wie die unmittelbar im Gehäusesitz des Gehäuses gebildete Lagerstelle. Auch die axiale Erstreckung der Lagerstellen kann gleich oder annähernd gleich sein.

Das Stützblech ist in vorteilhafter Ausführung scheibenförmig ausgebildet und besitzt eine sich in Radialrichtung erstreckende Scheibenwandung, die eine zentrale Ausnehmung begrenzt, in der zweckmäßigerweise die Welle aufgenommen ist. Das Stützblech und die Welle sind somit vorteilhafterweise koaxial zueinander angeordnet. An der radialen Scheibenwandung kann sich das Stützblech an der Wandung des Gehäuses abstützen, wobei mit zunehmender radialer Erstreckung geringere Abstützkräfte erforderlich sind. Die Abstützung erfolgt in Achsrichtung und gegebenenfalls auch in Radialrichtung. Vorteilhafterweise bildet eine Seitenfläche der Scheibenwandung des Stützblechs eine Abstützfläche für ein Getriebebauteil, beispielsweise ein Zahnrad, mit dem die Welle verbunden ist.

Die Lagerstelle ist von einem Hülsenabschnitt in dem Stützblech gebildet, in den ein Lagerteil eingesetzt ist. Der Hülsenabschnitt kann sich zumindest teilweise in Radialrichtung an der Gehäusewandung abstützen; ggf. kommt auch eine axiale Abstützung des Hülsenabschnitts in Betracht. Die radiale Erstreckung der Scheibenwandung ist vorzugsweise größer als die axiale Erstreckung des Hülsenabschnitts, um eine großflächige Verteilung von Stützkräften am Gehäuse zu erreichen.

Die Welle ist zweckmäßigerweise mit einem Getriebebauteil wie beispielsweise einem Zahnrad gekoppelt, das vorzugsweise koaxial zur Welle liegt. Eine Nabe des Getriebebauteils kann, gemäß weiterer vorteilhafter Ausführung, das im Stützblech aufgenommene Lager-Bauteil bilden, was den Vorteil hat, dass auf ein zusätzliches, separat ausgebildetes Lager-Bauteil verzichtet werden kann. Die Nabe besteht vorzugsweise aus einem reibungsarmen Material, beispielsweise aus einem thermoplastischen Kunststoff wie POM. Die Nabe ist insbesondere Bestandteil des Getriebebauteils, das fest mit der Welle verbunden ist und koaxial zu dieser angeordnet ist. Die Nabe übergreift die Stirnseite der Welle zweckmäßigerweise topfförmig, wobei der Nabe eine doppelte Funktion zukommt: Zum einen die Aufnahme und Verbindung mit der Welle, zum andern die Lagerung im Gehäuse, insbesondere im Stützblech, welches in das Gehäuse eingesetzt ist. Gegebenenfalls kann die Nabe aber auch unmittelbar in dem Gehäusesitz im Gehäuse gelagert sein.

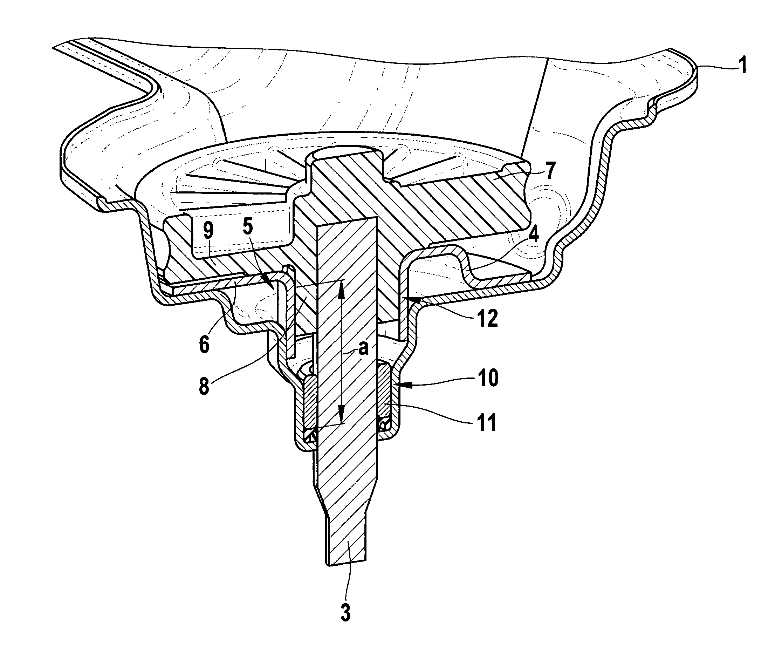

Weitere Vorteile und zweckmäßige Ausführungen sind den weiteren Ansprüchen, der Figurenbeschreibung und der Zeichnung zu entnehmen, in der die Lagerung einer Welle über zwei Lagerstellen in einem Gehäuse im Schnitt dargestellt ist.

Die in der Figur gezeigte Lagereinrichtung zur Lagerung einer Welle 3 umfasst ein Gehäuse 1 einer Motor-Getriebe-Einheit mit einem elektrischen Antriebsmotor und einem Getriebe, beispielsweise für ein Aggregat in einem Kraftfahrzeug wie ein Frontwischermotor. Bei der Welle 3 handelt es sich um eine Getriebe- bzw. Abtriebswelle, die von der Ankerwelle des Elektromotors angetrieben wird. Zur Umsetzung der Drehbewegung der Ankerwelle auf die Abtriebswelle 3 ist diese im Bereich einer Stirnseite drehfest mit einem Getriebebauteil 7 gekoppelt, welches im Ausführungsbeispiel als Zahnrad ausgebildet ist, das koaxial zur Welle 3 angeordnet ist.

Im Gehäuse 1 ist ein Stützblech 4 aufgenommen, welches als separat vom Gehäuse ausgeführtes Bauteil ausgebildet ist und insbesondere aus Blech besteht. Auch das Gehäuse kann aus Blech gefertigt sein. Beide Bauteile, also das Gehäuse und das Stützblech, werden vorzugsweise im Tiefziehverfahren hergestellt.

Im Gehäuse 1 ist eine erste Lagerstelle 10 gebildet, in der eine die Welle 3 lagernde Lagerbuchse 11 aufgenommen ist. Die erste Lagerstelle 10 befindet sich auf der dem Zahnrad 7 abgewandten Seite.

Mit axialem Abstand a befindet sich im Gehäuse 1 auf der dem Zahnrad 7 zugewandten Seite eine zweite Lagerstelle 12, die von einem koaxial zur Welle angeordneten Hülsenabschnitt 5 des Stützblechs 4 gebildet ist. Der Hülsenabschnitt 5 erstreckt sich in Achsrichtung und nimmt als Lager-Bauteil eine Nabe 8 des Zahnrades 7 auf. Der Hülsenabschnitt 5 ist im Bereich seiner freien axialen Stirnseite radial an einer Gehäuseinnenwand des Gehäuses 1 abgestützt.

Einteilig mit dem Hülsenabschnitt 5 ist eine sich in Radialrichtung erstreckende Scheibenwandung 6 des Stützblechs 4 ausgebildet, deren radiale Erstreckung die Achserstreckung des Hülsenabschnittes 5 übersteigt. Die radiale Scheibenwandung 6 ist axial am Gehäuse 1 abgestützt.

Die Wandseite der Scheibenwandung 6, die dem Zahnrad 7 zugewandt ist, bildet eine Stützfläche zur Abstützung eines sich in Radialrichtung erstreckenden Abschnittes 9 des Zahnrades 7, wobei der Abschnitt 9 einteilig mit der Nabe 8 ausgebildet ist. Auf diese Weise werden Stützkräfte, die von dem Zahnrad ausgehen, über eine größere radiale und axiale Fläche auf das Stützblech 4 und von dort weiter auf das Gehäuse 1 übertragen.

Die Nabe 8 ist in der zweiten Lagerstelle 12 im Hülsenabschnitt 5 des Stützblechs 4 aufgenommen und bildet ein Lager-Bauteil, so dass auf ein zusätzliches, separat ausgebildetes Lager-Bauteil verzichtet werden kann. Die Nabe 8, zweckmäßigerweise aber das gesamte Zahnrad 7 besteht aus einem reibungsarmen Material, insbesondere aus einem thermoplastischen Kunststoff wie beispielsweise POM.

Die beiden Lagerstellen 10 und 12, die im Gehäusesitz im Gehäuse 1 bzw. im Stützblech 4 gebildet sind, besitzen einen zumindest annähernd gleichen Durchmesser. Auch die axiale Erstreckung der Lagerstellen 10 und 12 ist zumindest annähernd gleich. Über die Wahl des Stützbleches 4 kann der axiale Abstand a zwischen erster und zweiter Lagerstelle auf das erforderliche Maß eingestellt werden.

## Patentansprüche

1. Lagereinrichtung zur Lagerung einer Welle, mit einer ersten Lagerstelle (10) für die Welle (3) in einem Gehäusesitz in einem Gehäuse (1), **dadurch gekennzeichnet, dass** im Gehäuse (1) ein separat ausgebildetes Stützblech (4) aufgenommen ist, in dem eine zweite Lagerstelle (12) für die Welle gebildet ist, wobei die erste und die zweite Lagerstelle (10, 12) mit axialem Abstand zueinander angeordnet sind.

2. Lagereinrichtung nach Anspruch 1, **dadurch gekennzeichnet, dass** das Stützblech (4) in den Gehäusesitz eingesetzt ist.

3. Lagereinrichtung nach Anspruch 1 oder 2, **dadurch gekennzeichnet, dass** die zweite Lagerstelle (12) im Stützblech (4) einen zumindest annähernd gleichen Durchmesser aufweist wie die unmittelbar in den Gehäusesitz eingebrachte erste Lagerstelle (10).

4. Lagereinrichtung nach einem der Ansprüche 1 bis 4, **dadurch gekennzeichnet, dass** das Stützblech (4) scheibenförmig ausgebildet ist und eine zentrale Ausnehmung aufweist.

5. Lagereinrichtung nach Anspruch 4, **dadurch gekennzeichnet, dass** die sich in Radialrichtung erstreckende Scheibenwandung (6) des Stützblechs (4) sich axial am Gehäuse (1) abstützt.

6. Lagereinrichtung nach Anspruch 4 oder 5, **dadurch gekennzeichnet, dass** die Ausnehmung im Stützblech (4) von einem einteilig mit der radialen Scheibenwandung (6) ausgeführten Hülsenabschnitt (5) begrenzt ist, der ein Lagerteil (8) aufnimmt.

7. Lagereinrichtung nach Anspruch 6, **dadurch gekennzeichnet, dass** der Hülsenabschnitt (5) radial am Gehäuse (1) abgestützt ist.

8. Lagereinrichtung nach einem der Ansprüche 4 bis 7, **dadurch gekennzeichnet, dass** die radiale Scheibenwandung (6) des Stützblechs (4) eine Stützfläche für ein Getriebebauteil, beispielsweise ein Zahnrad (7) bildet.

9. Lagereinrichtung nach einem der Ansprüche 4 bis 8, **dadurch gekennzeichnet, dass** die radiale Erstreckung mindestens gleich groß ist wie die axiale Erstreckung des Stützblechs (4).

10. Lagereinrichtung nach einem der Ansprüche 1 bis 9, **dadurch gekennzeichnet, dass** die Welle (3) mit einem Getriebebauteil, beispielsweise einem Zahnrad (7) gekoppelt ist und dass ein Radkörper bzw. eine Nabe (8) des Zahnrades (7) ein Lager-Bauteil bildet, das in einer Lagerstelle (12) drehbar aufgenommen ist.

11. Lagereinrichtung nach Anspruch 10, **dadurch gekennzeichnet, dass** die Nabe (8) eine Stirnseite der Welle topfförmig übergreift.

12. Lagereinrichtung nach Anspruch 10 oder 11, **dadurch gekennzeichnet, dass** die Nabe (8) in der im Stützblech (4) gebildeten Lagerstelle (12) aufgenommen ist.

13. Lagereinrichtung nach einem der Ansprüche 10 bis 12, **dadurch gekennzeichnet, dass** das Getriebebauteil (7) aus einem Kunststoff, insbesondere POM gefertigt ist.

14. Lagereinrichtung nach einem der Ansprüche 1 bis 13 zur Lagerung einer Ankerwelle (3) eines Elektromotors.

15. Lagereinrichtung nach einem der Ansprüche 1 bis 13 zur Lagerung einer Getriebe- oder Abtriebswelle.

16. Gehäuse, insbesondere Getriebegehäuse (1) mit einer Lagereinrichtung nach einem der Ansprüche 1 bis 15.

17. Gehäuse nach Anspruch 16, **dadurch gekennzeichnet, dass** das Gehäuse aus Blech gefertigt ist.

## Claims

1. Bearing device for mounting a shaft, having a first bearing point (10) for the shaft (3) in a housing seat in a housing (1), **characterized in that** a separately configured supporting plate (4) is received in the housing (1), in which supporting plate (4) a second bearing point (12) for the shaft is formed, the first and second bearing points (10, 12) being arranged at an axial spacing from one another.

2. Bearing device according to Claim 1, **characterized in that** the supporting plate (4) is inserted into the housing seat.

3. Bearing device according to Claim 1 or 2, **characterized in that** the second bearing point (12) in the supporting plate (4) has an at least approximately identical diameter to the first bearing point (10) which is made directly in the housing seat.

4. Bearing device according to one of Claims 1 to 3, **characterized in that** the supporting plate (4) is of disc-shaped configuration and has a central recess.

5. Bearing device according to Claim 4, **characterized in that** the disc wall (6) of the supporting plate (4), which disc wall (6) extends in the radial direction, is supported axially on the housing (1).

6. Bearing device according to Claim 4 or 5, **characterized in that** the recess in the supporting plate (4) is delimited by a sleeve section (5) which is configured in one piece with the radial disc wall (6) and receives a bearing part (8).

7. Bearing device according to Claim 6, **characterized in that** the sleeve section (5) is supported radially on the housing (1).

8. Bearing device according to one of Claims 4 to 7, **characterized in that** the radial disc wall (6) of the supporting plate (4) forms a supporting face for a gear-mechanism component, for example a gearwheel (7).

9. Bearing device according to one of Claims 4 to 8, **characterized in that** the radial extent is at least equally as great as the axial extent of the supporting plate (4).

10. Bearing device according to one of Claims 1 to 9, **characterized in that** the shaft (3) is coupled to a gear-mechanism component, for example a gearwheel (7), and **in that** a wheel body or a hub (8) of the gearwheel (7) forms a bearing component which is received rotatably in a bearing point (12).

11. Bearing device according to Claim 10, **characterized in that** the hub (8) engages over an end side of the shaft in a cup-shaped manner.

12. Bearing device according to Claim 10 or 11, **characterized in that** the hub (8) is received in the bearing point (12) which is formed in the supporting plate (4).

13. Bearing device according to one of Claims 10 to 12, **characterized in that** the gear-mechanism component (7) is manufactured from a plastic, in particular POM.

14. Bearing device according to one of Claims 1 to 13 for mounting an armature shaft (3) of an electric motor.

15. Bearing device according to one of Claims 1 to 13 for mounting a gear-mechanism shaft or output shaft.

16. Housing, in particular gear-mechanism housing (1) having a bearing device according to one of Claims 1 to 15.

17. Housing according to Claim 16, **characterized in that** the housing is manufactured from sheet metal.

## Revendications

1. Dispositif de palier pour le montage d'un arbre, comprenant un premier emplacement de palier (10) pour l'arbre (3) dans un siège de boîtier dans un boîtier (1), **caractérisé en ce qu'**une tôle d'appui (4) réalisée séparément est logée dans le boîtier (1), dans laquelle tôle est formé un deuxième emplacement de palier (12) pour l'arbre, le premier et le deuxième emplacement de palier (10, 12) étant disposés à une distance axiale l'un de l'autre.

2. Dispositif de palier selon la revendication 1, **caractérisé en ce que** la tôle d'appui (4) est insérée dans le siège de boîtier.

3. Dispositif de palier selon la revendication 1 ou 2, **caractérisé en ce que** le deuxième emplacement de palier (12) dans la tôle d'appui (4) présente un diamètre au moins approximativement égal à celui du premier emplacement de palier (10) ménagé directement dans le siège de boîtier.

4. Dispositif de palier selon l'une quelconque des revendications 1 à 3, **caractérisé en ce que** la tôle d'appui (4) est réalisée en forme de disque et comprend un évidement central.

5. Dispositif de palier selon la revendication 4, **caractérisé en ce que** la paroi de disque (6), s'étendant dans la direction radiale, de la tôle d'appui (4) s'appuie axialement contre le boîtier (1).

6. Dispositif de palier selon la revendication 4 ou 5, **caractérisé en ce que** l'évidement dans la tôle d'appui (4) est limité par une section de douille (5) réalisée d'une seule pièce avec la paroi de disque radiale (6), laquelle section de douille loge une partie de palier (8).

7. Dispositif de palier selon la revendication 6, **caractérisé en ce que** la section de douille (5) s'appuie radialement contre le boîtier (1).

8. Dispositif de palier selon l'une quelconque des revendications 4 à 7, **caractérisé en ce que** la paroi de disque radiale (6) de la tôle d'appui (4) forme une surface d'appui pour un composant de transmission, par exemple pour une roue dentée (7).

9. Dispositif de palier selon l'une quelconque des revendications 4 à 8, **caractérisé en ce que** l'étendue radiale est au moins aussi grande que l'étendue axiale de la tôle d'appui (4).

10. Dispositif de palier selon l'une quelconque des revendications 1 à 9, **caractérisé en ce que** l'arbre (3) est accouplé à un composant de transmission, par exemple à une roue dentée (7), et **en ce qu'**un corps de roue ou un moyeu (8) de la roue dentée (7) forme un composant de palier qui est logé à rotation dans un emplacement de palier (12).

11. Dispositif de palier selon la revendication 10, **caractérisé en ce que** le moyeu (8) recouvre en forme de pot une face frontale de l'arbre.

12. Dispositif de palier selon la revendication 10 ou 11, **caractérisé en ce que** le moyeu (8) est logé dans l'emplacement de palier (12) formé dans la tôle d'appui (4).

13. Dispositif de palier selon l'une quelconque des revendications 10 à 12, **caractérisé en ce que** le composant de transmission (7) est fabriqué en plastique, en particulier en POM.

14. Dispositif de palier selon l'une quelconque des revendications 1 à 13, pour le montage d'un arbre d'induit (3) d'un moteur électrique.

15. Dispositif de palier selon l'une quelconque des revendications 1 à 13, pour le montage d'un arbre de transmission ou de sortie.

16. Boîtier, en particulier boîtier de transmission (1) comprenant un dispositif de palier selon l'une quelconque des revendications 1 à 15.

17. Boîtier selon la revendication 16, **caractérisé en ce que** le boîtier est fabriqué en tôle.
